# EUROPEAN PATENT APPLICATION

(11) **EP 2 383 608 A1**
(43) Date of publication of application: **02.11.2011**
(21) Application number: 10178318.1
(22) Date of filing: 22.09.2010
(51) Int. Cl.: G03B 15/05, H04N 5/225

(54) **Digital imaging apparatus**

(30) Priority: 27.04.2010 TW 099113385
(71) Applicant: AnMo Electronics Corporation, Taipei (TW)
(72) Inventor: WU, Paul Neng-Wei, 300, Hsinchu City (TW)
(74) Representative: Viering, Jentschura & Partner

(57) **Abstract**

A digital imaging apparatus (110) is disclosed including: a light source module (240); and a light source controller (230) for receiving an image control signal and setting a radiation pattern of the light source module (240) to be corresponding to the image control signal.

## Description

The present disclosure generally relates to a digital imaging apparatus according to the pre-characterizing clause of claim 1.

Digital imaging technologies are widely applied in various applications, such as digital still cameras, digital video recorders, digital microscopic measurements, image object recognization operations, or the like.

Image quality is greatly influenced by the digital imaging performance, especially for the image of object details. Poor lighting conditions usually result in image defects such as images with insufficient brightness or contrast. In addition, relative movement between the digital imaging device and a target object could also easily cause motion blur or related problems. These situations often lead to adverse effect to the image quality of object details.

Clear image of object details, however, is crucial to many applications, such as digital microscopic photography, microscopic measurements, image recognization operations, auto-inspection systems, or the like. It may easily cause erroneous results in subsequent processes or judgments if the clearness of image details is insufficient or the image details are blurred, thereby reducing the system performance and reliability.

This in mind, the present invention aims at providing a digital imaging apparatus that improves the image quality of the details of the sensed image, thereby increasing the accuracy and imaging reliability.

This is achieved by a digital imaging apparatus according to claim 1. The dependent claims pertain to corresponding further developments and improvements.

As will be seen more clearly from the detailed description following below, the claimed digital imaging apparatus includes a light source controller that is coupled with a light source module for receiving an image control signal and setting a radiation pattern of the light source module to be corresponding to the image control signal.

In the following, the invention is further illustrated by way of example, taking reference to the accompanying drawings. Thereof

Fig. 1 is a simplified functional block diagram of an object inspection system in accordance with an exemplary embodiment,

Fig. 2 is a simplified functional block diagram of a digital imaging apparatus in accordance with an exemplary embodiment, and

Fig. 3 through Fig. 5 are simplified schematic diagrams of light source control signals generated by a light source controller of Fig. 2.

Reference will now be made in detail to exemplary embodiments of the invention, which are illustrated in the accompanying drawings. The same reference numbers may be used throughout the drawings to refer to the same or like parts or operations.

Certain terms are used throughout the description and following claims to refer to particular components. As one skilled in the art will appreciate, vendors may refer to a component by different names. This document does not intend to distinguish between components that differ in name but not in function. In the following description and in the claims, the terms "include" and "comprise" are used in an open-ended fashion, and thus should be interpreted to mean "include, but not limited to ...." Also, the phrase "coupled with" is intended to compass any indirect or direct connection. Accordingly, if this document mentioned that a first device is coupled with a second device, it means that the first device may be directly connected to the second device (including through an electrical connection or other signal connections, such as wireless communications or optical communications), or indirectly connected to the second device through an indirect electrical connection or signal connection via other intermediate device or connection means.

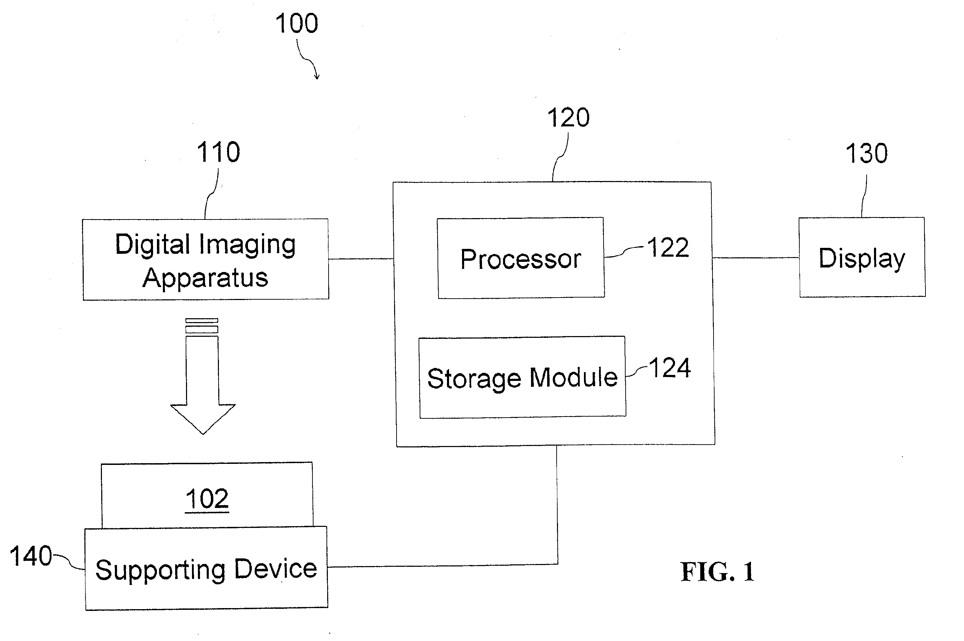

Fig. 1 shows a simplified functional block diagram of an object inspection system 100 in accordance with an exemplary embodiment. As shown in Fig. 1, the object inspection system 100 comprises a digital imaging apparatus 110, a host device 120, a display 130, and a supporting device 140. The digital imaging apparatus 110 and the display 130 are coupled with the host device 120. In this embodiment, the host device 120 comprises a processor 122 and a storage module 124, wherein the storage module 124 may be used for storing computer programs and image data required for the operations of the object inspection system 100.

The digital imaging apparatus 110 may be implemented with a digital camera, digital video recorder, digital microscope, and any other apparatus with image sensing capability. The operations of the digital imaging apparatus 110 will be described further in the following.

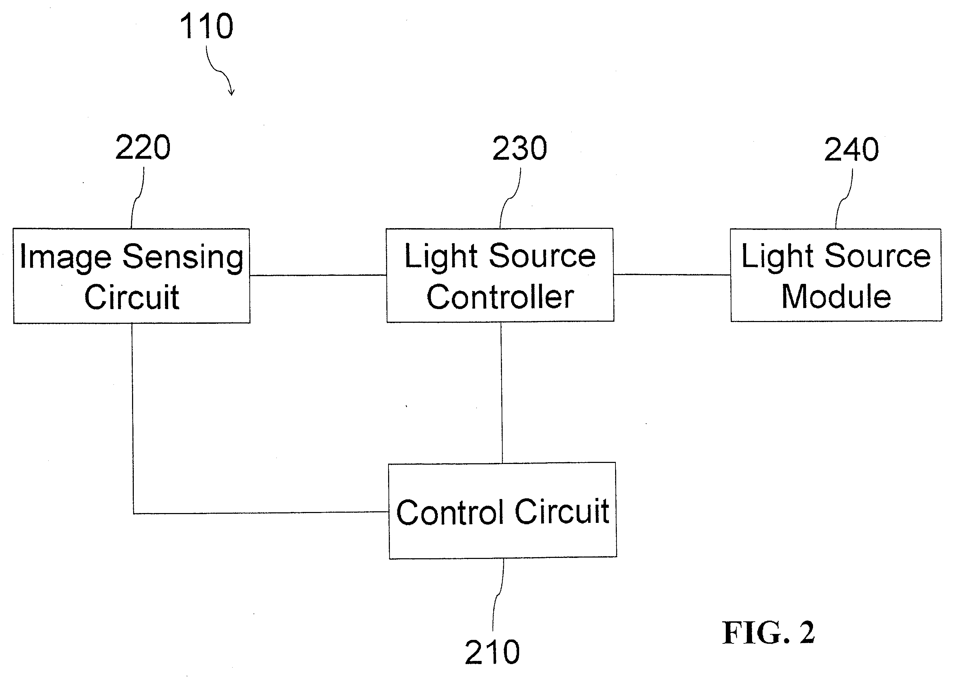

Fig. 2 is a simplified functional block diagram of the digital imaging apparatus 110 in accordance with an exemplary embodiment. In this embodiment, the digital imaging apparatus 110 comprises a control circuit 210, an image sensing circuit 220, a light source controller 230, and a built-in light source module 240. As shown, the image sensing circuit 220 and the light source controller 230 are coupled with the control circuit 210, and the built-in light source module 240 is coupled with the light source controller 230.

In operations, the control circuit 210 is coupled with the host device 120 through a predetermined transmission interface, such as USB or IEEE 1394, and receives electricity required for the operations of the digital imaging apparatus 110 from the host device 120. In one embodiment, the built-in light source module 240 of the digital imaging apparatus 110 may be implemented with LED devices to reduce required power consumption.

The image sensing circuit 220 may comprise one or more CMOS (Complementary Metal Oxide Semiconductor) sensors, CCD (Charge Coupled Device) sensors, CMOS/CCD hybrid sensors, CID (Charge Injection Device) sensors, or other optical sensing components, for sensing images of a target object 102 positioned on the supporting device 140 to generate corresponding image signals. In operations, the image sensing circuit 220 also generates image synchronization signals, such as frame synchronization signals, V-sync signals, and/or H-sync signals. The image sensing circuit 220 transmits the generated image synchronization signals together with the object image signals to the control circuit 210.

As described previously, poor lighting conditions during the operations of the digital imaging apparatus 110 or relative movement between the digital imaging apparatus 110 and the target object 102 could adversely affect the quality of resulting image of the target object 102, especially for the object details. For example, the object inspection system 100 may encounter slight vibrations due to some environmental factors, such as vibration generated by the operation of mechanical components during the transportation of target objects conducted by the supporting device 140. Such vibration would cause relative movement between the digital imaging apparatus 110 and the target object 102 when the digital imaging apparatus 110 is sensing images of the target object 102.

In order to improve the imaging quality of the digital imaging apparatus 110, the image sensing circuit 220 of one embodiment generates and transmits an image control signal to the light source controller 230 during the image sensing operations. The image control signal is utilized for indicating the time points or period of an image acquisition operation conducted by the image sensing circuit 220, and is not the ordinary clock signal employed for the operations of the light source controller 230. In implementations, the image control signal may be implemented with the aforementioned image synchronization signal, such as the frame synchronization signal, V-sync signal, or H-sync signal. Alternatively, the image control signal may be implemented with a signal synchronized with the image synchronization signal and having a frequency that is multiple times of the frequency of the image synchronization signal.

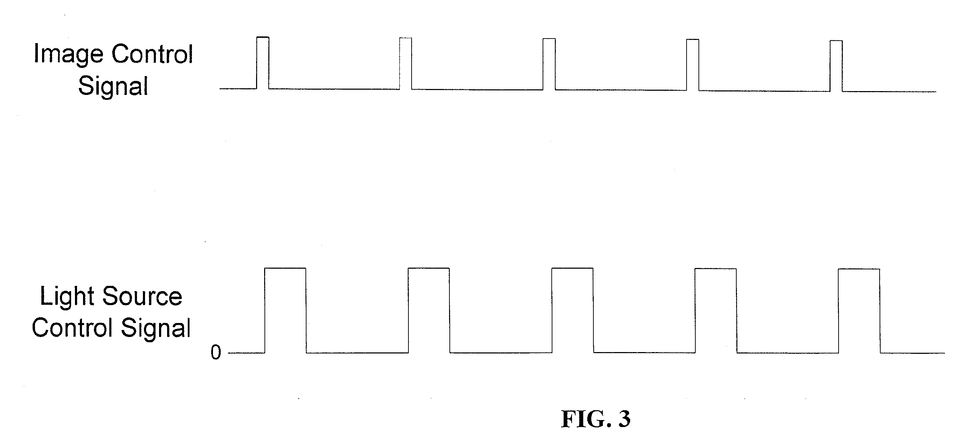

When receives the image control signal generated by the image sensing circuit 220, the light source controller 230 generates a light source control signal having a frequency corresponding to that of the image control signal to control the radiation pattern of the light source module 240. In one embodiment, as shown in Fig. 3, the light source controller 230 generates a light source control signal synchronized with the image control signal and having the same frequency as the image control signal.

In the embodiment shown in Fig. 3, the light source module 240 illuminates when triggered by the edges of the light source control signal. If the image control signal is implemented with the frame synchronization signal or V-sync signal, then the light source module 240 would thus have a lighting frequency the same as the image acquisition frequency of the image sensing circuit 220, and only radiate during the image acquisition operation conducted by the image sensing circuit 220.

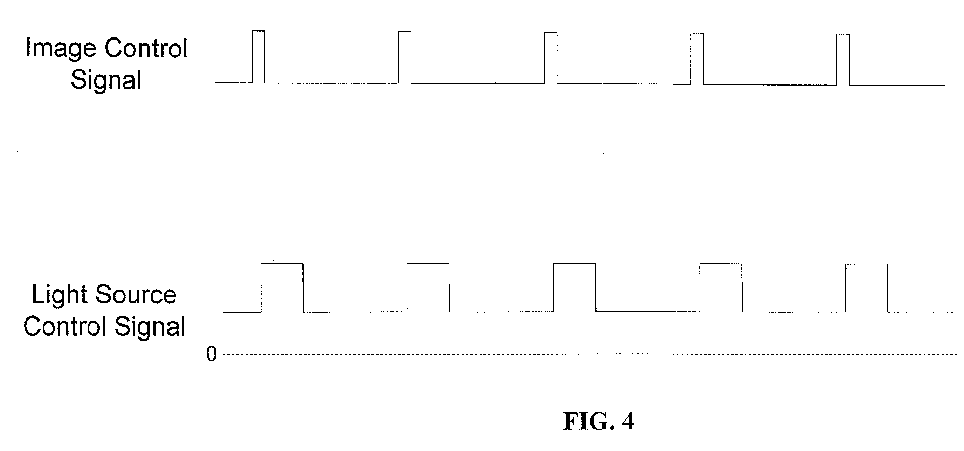

In another embodiment, as shown in Fig. 4, the light source controller 230 generates a light source control signal synchronized with the image control signal and having the same frequency as the image control signal. A difference between this embodiment and the previous embodiment of Fig. 3 is that in the embodiment of Fig. 4 the light source controller 230 maintains the light source control signal at a predetermined active level (such as a first predetermined voltage) or above. However, when the light source controller 230 is triggered by the edges of the image control signal, the light source controller 230 pulls up the pulse level of the light source control signal (e.g., pulls it up to a second predetermined voltage), or increases the pulse width of the light source control signal. As a result, the light source module 240 illuminates continuously, but enhances the intensity of light output when triggered by the edges of the image control signal. For example, the light source controller 230 may apply an overshot voltage to the light source control signal to pull up the pulse level (or to increase the pulse width) of the light source control signal at each time the light source controller 230 is triggered by the edge of the image control signal.

Thus, if the image control signal is implemented with the frame synchronization signal or V-sync signal, then the light source module 240 outputs more beams to illuminate the target object 102 during the image acquisition operation conducted by the image sensing circuit 220.

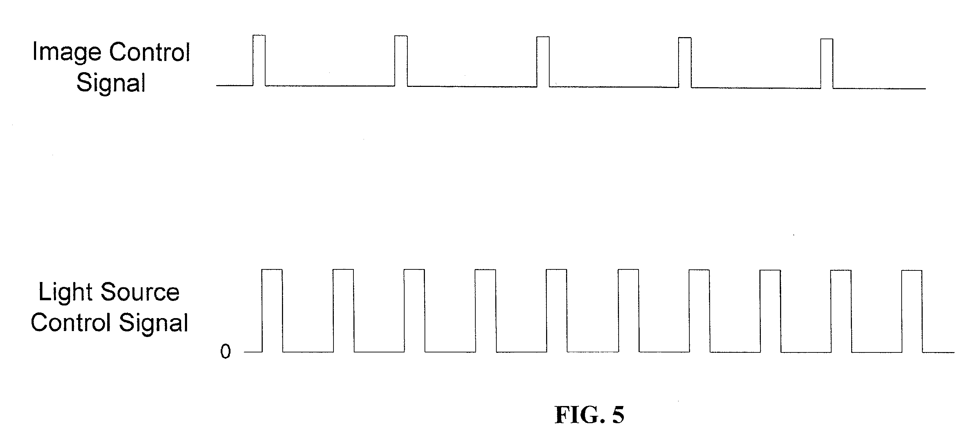

In another embodiment, as shown in Fig. 5, the light source controller 230 generates a light source control signal synchronized with the image control signal and having a frequency that is an integer times of the frequency of the image control signal. If the image control signal is implemented with the frame synchronization signal or V-sync signal, the then lighting frequency of the light source module 240 would be the integer times of the image acquisition frequency of the image sensing circuit 220. Accordingly, each time the image sensing circuit 220 conducts the image acquisition operation, the light source module 240 would correspondingly output beams to illuminate the target object 102.

In another embodiment, the image control signal is implemented with the H-sync signal, and the light source controller 230 generates a light source control signal synchronized with the H-sync signal and having a frequency less than that of the H-sync signal. For example, the light source controller 230 may generate a light source control signal synchronized with the H-sync signal and having a frequency the same as the V-sync signal or the frame synchronization signal. By this way, the lighting frequency of the light source module 240 would become the same as the image acquisition frequency of the image sensing circuit 220. Therefore, the light source module 240 radiates to illuminate the target object 102 during the image acquisition operation conducted by the image sensing circuit 220.

In some of the foregoing embodiments, the light source control signal generated by the light source controller 230 has a duty cycle less than 100%, so the light source module 240 would illuminate only when triggered by the edges of the light source control signal but would not keep illuminating all the time. Power required for the operations of the digital imaging apparatus 110 can be thus reduced.

In implementations, the image control signal generated by the imaging sensing circuit 220 may have a frequency lower than that of the image synchronization signal. In one embodiment, for example, the image control signal generated by the imaging sensing circuit 220 is half of that of the image synchronization signal. Under this situation, the light source controller 230 may generate a light source control signal having a frequency that is twice of that of the image control signal so that the generated light source control signal is synchronized with the image acquisition operation conducted by the image sensing circuit 220.

In previous embodiments, the image control signal is generated by the image sensing circuit 220. This is merely an example and not intend to restrict the practical implementations of the digital imaging apparatus 110. For example, the image control signal may be instead generated by the control circuit 210 and then transmitted to the light source controller 230. In one embodiment, the control circuit 210 may utilize the frame synchronization signal or V-sync signal transmitted from the image sensing circuit 220 to be an image control signal and then transmit it to the light source controller 230. In another embodiment, the control circuit 210 may first up-convert or downconvert the frequency of the frame synchronization signal or V-sync signal transmitted from the image sensing circuit 220, and utilize the frequency up-converted or down-converted signal to be an image control signal and then transmit it to the light source controller 230. In yet another embodiment, the control circuit 210 first down-converts the frequency of the H-sync signal transmitted from the image sensing circuit 220, utilizes the frequency down-converted signal to be an image control signal, and then transmits it to the light source controller 230.

The way the light source controller 230 generates a light source control signal according to the image control signal generated by the control circuit 210 to control the radiation pattern of the light source module 240 is similar to the previously described embodiments. For the sake of brevity, similar descriptions will not be repeated here.

From one aspect of the circuitry functions, the aforementioned image sensing circuit 220 or control circuit 210 can be regarded as an image synchronization signal generator for generating an image synchronization signal.

As illustrated in the foregoing embodiments, the light source controller 230 controls the radiation pattern of the light source module 240 according to the image control signal or image synchronization signal generated from the image sensing circuit 220 or control circuit 210, so that the light source module 240 either illuminates only during the image acquisition operation conducted by the image sensing circuit 220 or enhances the intensity of light output during the image acquisition operation conducted by the image sensing circuit 220. This approach offers a sufficient lighting condition for the image sensing circuit 220 during the image acquisition operation so as to mitigate or avoid the imaging problems such as dark images or insufficient contrast.

As a result, the time of exposure required for the image acquisition operation of the image sensing circuit 220 can be shortened, thereby significantly mitigating the adverse effect to the image quality caused by the relative movement between the digital imaging apparatus 110 and the target object 102. Thus, the digital imaging quality for both still images and real-time dynamic images can be greatly improved by using the approaches disclosed above.

In implementations, the flicker of the light source module 240 will not be sensed by human eyes if the light source controller 230 controls the light source module 240 to have a lighting frequency of 60 Hz or above.

The control circuit 210 then transmits the image signals corresponding to the target object 102 generated by the image sensing circuit 220 to the host device 120. The processor 122 of the host device 120 conducts image recognization operations, image measurements, image analyzing operations, or other subsequent processes on part of or the entire sensed image to determine whether the target object 102 complies with predetermined quality control requirements. Since the digital imaging apparatus 110 described above is capable of greatly improving the image quality of the details of the sensed image, mistakes that may be made by the processor 122 in processing or determining the images can be effectively reduced, thereby increasing the accuracy and reliability of the object inspection system 100.

The processor 122 may also display the images sensed by the digital imaging apparatus 110 or image inspection results generated by the processor 122 on the display 130, so that a quality control operator can monitor the quality inspection procedure or related image analysis parameters for the target object 102. When the inspection for the target object 102 is complete, the processor 122 instructs the supporting device 140 to move to or switch to a next target object to be inspected so as to repeat the aforementioned operations. In some embodiments where the object inspection system 100 is designed to operate automatically, the display 130 may be omitted.

In the foregoing descriptions, the implementations of the digital imaging apparatus 110 are described as employed in the object inspection system 100. However, such descriptions are exemplary only and shall in no way be interpreted to limit the applications of the present invention. The disclosed digital imaging apparatus 110 has practical applications in many fields including, but not limited to, automotive applications, medicine-related applications, industrial applications, educational applications, and personal hobby applications.

In addition, when the digital imaging apparatus 110 is used in hand-held fashion, the way the light source controller 230 controls the radiation pattern of the light source module 240 described previously effectively mitigates or reduces the adverse effect to the imaging quality of the digital imaging apparatus 110 caused by hand vibration or movement, thereby achieving better hand vibration proof effect.

For completeness, various aspects of the invention are set out in the following numbered clauses:

1. A digital imaging apparatus comprising:
a light source module;
an image synchronization signal generator for generating an image synchronization signal; and
a light source controller, coupled with the light source module and the image synchronization signal generator, for generating a light source control signal having a frequency corresponding to the image synchronization signal and synchronized with the image synchronization signal to control the light output of the light source module.

2. The digital imaging apparatus of clause 1, wherein the image synchronization signal comprises a frame synchronization signal, a vertical synchronization signal, or a horizontal synchronization signal.

3. The digital imaging apparatus of clause 2, wherein the light source control signal and the image synchronization signal have the same frequency.

4. The digital imaging apparatus of clause 2, wherein a frequency of the light source control signal is multiple times of that of the image synchronization signal.

5. The digital imaging apparatus of clause 2, wherein a frequency of the image synchronization signal is multiple times of that of the light source control signal.

6. The digital imaging apparatus of clause 1, wherein the image synchronization signal generator comprises an image sensing circuit for sensing images of a target object.

7. The digital imaging apparatus of clause 1, wherein the image synchronization signal generator comprises a control circuit and the control circuit receives electricity required for the operations of the digital imaging apparatus from an external device.

8. The digital imaging apparatus of clause 1, wherein the light source controller pull up the pulse level of the light source control signal or increases the pulse width of the light source control signal when triggered by an edge of the image synchronization signal.

9. A digital imaging apparatus comprising:
a light source module; and
a light source controller for receiving an image control signal and setting a radiation pattern of the light source module to be corresponding to the image control signal.

10. The digital imaging apparatus of clause 9, wherein the light source controller sets a lighting frequency of the light source module to be substantially the same as the frequency of the image control signal.

11. The digital imaging apparatus of clause 9, wherein the light source controller sets a lighting frequency of the light source module to be a multiple times of the frequency of the image control signal.

12. The digital imaging apparatus of clause 9, wherein the light source controller sets a lighting frequency of the light source module so that the frequency of the image control signal is a multiple times of the lighting frequency of the light source module.

13. The digital imaging apparatus of clause 9, further comprising:
an image sensing circuit for generating the image control signal, wherein the image control signal corresponds to the time points or period of an image acquisition operation conducted by the image sensing circuit.

14. The digital imaging apparatus of clause 9, further comprising:
a control circuit for generating the image control signal and receiving electricity required for the operations of the digital imaging apparatus from an external device.

15. The digital imaging apparatus of clause 9, wherein the image control signal corresponds to the time points or period of an image acquisition operation conducted by an image sensing circuit, and the light source controller controls the light source to illuminate or to enhance the intensity of light output during the image acquisition operation conducted by the image sensing circuit.

16. An object inspection system comprising:
a supporting device for supporting a target object;
an image sensing circuit for sensing images of the target object and generating an image synchronization signal;
a host device coupled with the image sensing circuit for conducting image processing operations on part of or the entire image sensed by the image sensing circuit;
a light source module;
a light source controller, coupled with the image sensing circuit and the light source module, for generating a light source control signal having a duty circle less than 100% according to the image synchronization signal to control the light output of the light source module; and
a control circuit for receiving electricity required for the operations of the image sensing circuit, the light source module, and the light source controller from the host device.

17. The object inspection system of clause 16, wherein the light source controller controls the light source module to illuminate during the image acquisition operation conducted by the image sensing circuit.

18. The object inspection system of clause 16, wherein the light source controller controls the light source module to enhance the intensity of light output during the image acquisition operation conducted by the image sensing circuit.

19. The object inspection system of clause 16, wherein the light source control signal is synchronized with the image acquisition operation conducted by the image sensing circuit.

20. The object inspection system of clause 19, wherein the light source control signal has a frequency corresponding to an image acquisition frequency of the image sensing circuit.

All combinations and sub-combinations of the above-described features also belong to the invention.

## Claims

1. A digital imaging apparatus (110) comprising:
a light source module (240); and
**characterised by**:
a light source controller (230) for receiving an image control signal and setting a radiation pattern of the light source module (240) to be corresponding to the image control signal.

2. The digital imaging apparatus (110) of claim 1, **characterised in that** the light source controller (230) sets a lighting frequency of the light source module (240) to be substantially the same as the frequency of the image control signal.

3. The digital imaging apparatus (110) of claim 1, **characterised in that** the light source controller (230) sets a lighting frequency of the light source module (240) to be a multiple times of the frequency of the image control signal.

4. The digital imaging apparatus (110) of claim 1, **characterised in that** the light source controller (230) sets a lighting frequency of the light source module (240) so that the frequency of the image control signal is a multiple times of the lighting frequency of the light source module.

5. The digital imaging apparatus (110) of claim 1, **characterised by**:
an image sensing circuit (220) for generating the image control signal, wherein the image control signal corresponds to the time points or period of an image acquisition operation conducted by the image sensing circuit (220).

6. The digital imaging apparatus (110) of claim 1, **characterised by**:
a control circuit (210) for generating the image control signal and receiving electricity required for the operations of the digital imaging apparatus (110) from an external device (120).

7. The digital imaging apparatus (110) of claim 1, **characterised in that** the image control signal corresponds to the time points or period of an image acquisition operation conducted by an image sensing circuit (220), and the light source controller (230) controls the light source to illuminate or to enhance the intensity of light output during the image acquisition operation conducted by the image sensing circuit (220).

8. The digital imaging apparatus (110) of claim 1, **characterised in that** the image control signal comprises a frame synchronization signal, a vertical synchronization signal, or a horizontal synchronization signal.

9. The digital imaging apparatus (110) of claim 1, 2, 3, 4, 5, 6, 7, or 8, **characterised in that** the light source controller (230) generates a light source control signal having a frequency corresponding to the image control signal and synchronized with the image control signal to control the light output of the light source module (240).

10. The digital imaging apparatus (110) of claim 9, **characterised in that** the light source control signal and the image control signal have the same frequency.

11. The digital imaging apparatus (110) of claim 9, **characterised in that** a frequency of the light source control signal is multiple times of that of the image control signal.

12. The digital imaging apparatus (110) of claim 9, **characterised in that** a frequency of the image control signal is multiple times of that of the light source control signal.

13. The digital imaging apparatus (110) of claim 9, **characterised in that** the light source controller (230) pulls up the pulse level of the light source control signal or increases the pulse width of the light source control signal when triggered by an edge of the image control signal.
